# EUROPEAN PATENT SPECIFICATION

(11) **EP 3 148 163 B1**
(45) Date of publication and mention of the grant of the patent: **07.11.2018**
(21) Application number: 14896942.1
(22) Date of filing: 30.06.2014
(51) Int. Cl.: H04L 29/10, H04L 29/08, H04L 29/06, H04L 12/24

(54) **FUNCTION TRANSFER METHOD, DEVICE AND SYSTEM**
FUNKTIONSTRANSFERVERFAHREN, -VORRICHTUNG UND -SYSTEM
PROCÉDÉ, DISPOSITIF ET SYSTÈME DE TRANSFERT DE FONCTION

(43) Date of publication of application: 29.03.2017
(60) Divisional application: 18194557.7
(73) Proprietor: Huawei Technologies Co., Ltd., Longgang District Shenzhen, Guangdong 518129 (CN)
(72) Inventor: XIE, Yong, Shenzhen Guangdong 518129 (CN); CHEN, Xueliang, Shenzhen Guangdong 518129 (CN)
(74) Representative: Pfenning, Meinig & Partner mbB
(86) International application number: PCT/CN2014/081092
(87) International publication number: WO 2016/000109

(56) References cited:
- EP-A1- 2 528 300
- CN-A- 102 279 771
- CN-A- 102 387 024
- CN-A- 102 984 762
- CN-A- 103 139 139
- CN-A- 103 889 002
- US-A1- 2014 089 389
- "Follow me cloud: interworking federated clouds and distributed mobile networks", IEEE NETWORK, IEEE SERVICE CENTER, NEW YORK, NY, US, vol. 27, no. 5, 1 September 2013 (2013-09-01), pages 12-19, XP011528491, ISSN: 0890-8044, DOI: 10.1109/MNET.2013.6616110 [retrieved on 2013-09-30]

## Description

### TECHNICAL FIELD

The present invention relates to the communications field, and in particular, to a function migration method, an apparatus, and a system.

### BACKGROUND

In a software defined network (Software Defined Network, SDN for short), a control plane of a network device is separated from a data plane, so that network traffic is controlled flexibly. The SDN is a good platform for updating a core network and an application of the core network. In network functions virtualization (Network Function Virtualization, NFV for short), common hardware and a virtualization technology are used for carrying various software applications with different functions, so that a function of a network device no longer relies on a dedicated hardware device. In this way, network resources can be centrally scheduled, and the network resources are shared flexibly. In addition, a dedicated hardware device does not need to be deployed for a new service, and therefore the new service can be quickly developed and deployed. Because the SDN and the NFV have advantages such as resource utilization improvement, network control flexibility, and easy service update, in a cloud radio access network (Cloud Radio Access Network, Cloud RAN for short), a wideband code division multiple access (Wide band Code Division Multiple Access, WCDMA for short) network, and the like, a core network and an application of the core network are deployed and updated based on the SDN and the NFV.

In the prior art, when a user uses a corresponding network function, if the user exceeds a service range of a controller covered by an original network node, and transfers to a coverage area of a controller of another network node, the user connects to an existing network node to continue performing a function service. In this way, a function is migrated between different network nodes.

In a process of migrating the function between the different network nodes, in the prior art, the function can be migrated only when the user exceeds the service range of the controller covered by the original network node. Because the network is not capable of actively allocating the function service used by the user to another network node, some network nodes may process a large quantity of function services of the user while some network nodes are nearly idle. In addition, the network node that the user connects to is not necessarily a network node with a best signal, a shortest path, or least network congestion. In this way, performance of a function used by the user and network performance are relatively poor.

### SUMMARY

Embodiments of the present invention provide a function migration method, an apparatus, and a system, so that a network can actively transfer a function service of a user between network nodes, and performance of a function used by the user and network performance are improved.

To achieve the foregoing objective, the following technical solutions are used in the embodiments of the present invention:
According to a first aspect, a function migration method is provided, including:
sending, by a first network node, a function migration request to a second network node, where the function migration request is used to request to migrate a first function of a first user;
receiving, by the first network node, a function migration response sent by the second network node; and
sending, by the first network node, a migration execution instruction to the second network node, where the migration execution instruction is used to instruct the second network node to perform the first function service on the first user.

With reference to the first aspect, in a first possible implementation manner, the method further includes:
sending, by the first network node, a function migration file to the second network node, where
the function migration file includes at least one piece of the following information:
   a mirror program of the first function of the first user, configuration information of the first user, a radio air interface scheduling priority, service data information of the first user, or assured bandwidth of the first user.

With reference to the first aspect or the first possible implementation manner of the first aspect, in a second possible implementation manner, the method further includes:
canceling, by the first network node, the first function of the first user, and clearing context information corresponding to the first function of the first user.

With reference to the first aspect or the first or the second possible implementation manner of the first aspect, in a third possible implementation manner, the function migration request sent by the first network node to the second network node carries an identifier of the first user and an identifier of the first function.

With reference to the third possible implementation manner of the first aspect, in a fourth possible implementation manner, the function migration request includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a second aspect, a function migration method is provided, including:
sending, by a controller, a function migration request to a second network node, where the function migration request is used to request to migrate a first function of a first user;
receiving, by the controller, a function migration response sent by the second network node; and
sending, by the controller, a migration execution instruction to the second network node, where the migration execution instruction is used to instruct the second network node to perform the first function service on the first user.

With reference to the second aspect, in a first possible implementation manner, the method further includes:
sending, by the controller, a function migration file to the second network node, where
the function migration file includes at least one piece of the following information:
   a mirror program of the first function of the first user, configuration information of the first user, a radio air interface scheduling priority, service data information of the first user, or assured bandwidth of the first user.

With reference to the second aspect or the first possible implementation manner of the second aspect, in a second possible implementation manner, the method further includes:
sending, by the controller, the migration execution instruction to the first network node, where the migration execution instruction is used to instruct the first network node to cancel the first function of the first user, and clear context information corresponding to the first function of the first user.

With reference to the second aspect or the first or the second possible implementation manner of the second aspect, in a third possible implementation manner, the function migration request sent by the controller to the second network node carries an identifier of the first user and an identifier of the first function.

With reference to the third possible implementation manner of the second aspect, in a fourth possible implementation manner, the function migration request includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a third aspect, a function migration method is provided, including:
receiving, by a second network node, a function migration request sent by a first network node or a controller, where the function migration request is used to request to migrate a first function of a first user;
sending, by the second network node, a function migration response to the first network node or the controller;
receiving a migration execution instruction sent by the first network node or the controller; and
executing, by the second network node, the migration execution instruction to perform the first function service on the first user.

With reference to the third aspect, in a first possible implementation manner, the method includes:
receiving, by the second network node, a function migration file sent by the first network node or the controller, where
the function migration file includes at least one piece of the following information:
   a mirror program of the first function of the first user, configuration information of the first user, a radio air interface scheduling priority, service data information of the first user, or assured bandwidth of the first user.

With reference to the third aspect or the first possible implementation manner of the third aspect, in a second possible implementation manner, the function migration request received by the second network node carries an identifier of the first user and an identifier of the first function.

With reference to the second possible implementation manner of the third aspect, in a third possible implementation manner, the function migration request includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a fourth aspect, a first network node is provided, including:
a sending unit, configured to send a function migration request to a second network node, where the function migration request is used to request to migrate a first function of a first user; and
a receiving unit, configured to receive a function migration response sent by the second network node; and
the sending unit is further configured to send a migration execution instruction to the second network node, where the migration execution instruction is used to instruct the second network node to perform the first function service on the first user.

With reference to the fourth aspect, in a first possible implementation manner, the sending unit is further configured to:
send a function migration file to the second network node, where
the function migration file sent by the sending unit includes at least one piece of the following information:
   a mirror program of the first function of the first user, configuration information of the first user, a radio air interface scheduling priority, service data information of the first user, or assured bandwidth of the first user.

With reference to the fourth aspect or the first possible implementation manner of the fourth aspect, in a second possible implementation manner, the first network node further includes:
a release unit, configured to: cancel the first function of the first user on the first network node, and clear context information corresponding to the first function of the first user.

With reference to the fourth aspect or the first or the second possible implementation manner of the fourth aspect, in a third possible implementation manner, the function migration request sent by the sending unit carries an identifier of the first user and an identifier of the first function.

With reference to the third possible implementation manner of the fourth aspect, in a fourth possible implementation manner, the function migration request sent by the sending unit includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a fifth aspect, a controller is provided, including:
a sending unit, configured to send a function migration request to a second network node, where the function migration request is used to request to migrate a first function of a first user; and
a receiving unit, configured to receive a function migration response sent by the second network node; and
the sending unit is further configured to send a migration execution instruction to the second network node, where the migration execution instruction is used to instruct the second network node to perform the first function service on the first user.

With reference to the fifth aspect, in a first possible implementation manner, the sending unit is further configured to:
send a function migration file to the second network node, where the function migration file sent by the sending unit includes at least one piece of the following information:
a mirror program of the first function of the first user, configuration information of the first user, a radio air interface scheduling priority, service data information of the first user, or assured bandwidth of the first user.

With reference to the fifth aspect or the first possible implementation manner of the fifth aspect, in a second possible implementation manner, the sending unit is further configured to:
send the migration execution instruction to the first network node, where the migration execution instruction is used to instruct the first network node to cancel the first function of the first user, and clear context information corresponding to the first function of the first user.

With reference to the fifth aspect or the first or the second possible implementation manner of the fifth aspect, in a third possible implementation manner, the function migration request sent by the sending unit carries an identifier of the first user and an identifier of the first function.

With reference to the third possible implementation manner of the fifth aspect, in a fourth possible implementation manner, the function migration request sent by the sending unit includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a sixth aspect, a second network node is provided, including:
a receiving unit, configured to receive a function migration request sent by a first network node or a controller, where the function migration request is used to request to migrate a first function of a first user;
a sending unit, configured to send a function migration response to the first network node or the controller, where
the receiving unit is further configured to receive a migration execution instruction sent by the first network node or the controller; and
an execution unit, configured to execute the migration execution instruction to perform the first function service on the first user.

With reference to the sixth aspect, in a first possible implementation manner, the receiving unit is further configured to:
receive a function migration file sent by the first network node or the controller, where
the function migration file received by the receiving unit includes at least one piece of the following information:
   a mirror program of the first function of the first user, configuration information of the first user, a radio air interface scheduling priority, service data information of the first user, or assured bandwidth of the first user.

With reference to the sixth aspect or the first possible implementation manner of the sixth aspect, in a second possible implementation manner, the function migration request received by the receiving unit carries an identifier of the first user and an identifier of the first function.

With reference to the second possible implementation manner of the sixth aspect, in a third possible implementation manner, the function migration request received by the receiving unit includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a seventh aspect, a first network node is provided, including a processor, a transmitter, a receiver, and a memory, where the processor, the transmitter, the memory, and the memory are connected to each other, the memory is configured to store code, and when running the code stored in the memory, the processor performs the following steps:
the processor is configured to send a function migration request to a second network node by using the transmitter, where the function migration request is used to request to migrate a first function of a first user;
the processor is further configured to receive, by using the receiver, a function migration response sent by the second network node; and
the processor is further configured to send a migration execution instruction to the second network node by using the transmitter, where the migration execution instruction is used to instruct the second network node to perform the first function service on the first user.

With reference to the seventh aspect, in a first possible implementation manner, the processor is further configured to:
send a function migration file to the second network node by using the transmitter, where
the function migration file sent by the transmitter includes at least one piece of the following information:
   a mirror program of the first function of the first user, configuration information of the first user, a radio air interface scheduling priority, service data information of the first user, or assured bandwidth of the first user.

With reference to the seventh aspect or the first possible implementation manner of the seventh aspect, in a second possible implementation manner, the processor is further configured to:
cancel the first function of the first user on the first network node, and clear context information corresponding to the first function of the first user.

With reference to the seventh aspect or the first or the second possible implementation manner of the seventh aspect, in a third possible implementation manner, the function migration request sent by the transmitter carries an identifier of the first user and an identifier of the first function.

With reference to the third possible implementation manner of the seventh aspect, in a fourth possible implementation manner, the function migration request sent by the transmitter includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to an eighth aspect, a controller is provided, including a processor, a transmitter, a receiver, and a memory, where the processor, the transmitter, the memory, and the memory are connected to each other, the memory is configured to store code, and when running the code stored in the memory, the processor performs the following steps:
the processor is configured to send a function migration request to a second network node by using the transmitter, where the function migration request is used to request to migrate a first function of a first user;
the processor is further configured to receive, by using the receiver, a function migration response sent by the second network node; and
the processor is further configured to send a migration execution instruction to the second network node by using the transmitter, where the migration execution instruction is used to instruct the second network node to perform the first function service on the first user.

With reference to the eighth aspect, in a first possible implementation manner, the processor is further configured to:
send a function migration file to the second network node by using the transmitter, where
the function migration file sent by the sending unit includes at least one piece of the following information:
   a mirror program of the first function of the first user, configuration information of the first user, a radio air interface scheduling priority, service data information of the first user, or assured bandwidth of the first user.

With reference to the eighth aspect or the first possible implementation manner of the eighth aspect, in a second possible implementation manner, the processor is further configured to:
send the migration execution instruction to the first network node by using the transmitter, where the migration execution instruction is used to instruct the first network node to cancel the first function of the first user, and clear context information corresponding to the first function of the first user.

With reference to the eighth aspect or the first or the second possible implementation manner of the eighth aspect, in a third possible implementation manner, the function migration request sent by the transmitter carries an identifier of the first user and an identifier of the first function.

With reference to the third possible implementation manner of the eighth aspect, in a fourth possible implementation manner, the function migration request sent by the transmitter includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

According to a ninth aspect, a second network node is provided, including a processor, a transmitter, a receiver, and a memory, where the processor, the transmitter, the memory, and the memory are connected to each other, the memory is configured to store code, and when running the code stored in the memory, the processor performs the following steps:
the processor is configured to receive, by using the receiver, a function migration request sent by a first network node or a controller, where the function migration request is used to request to migrate a first function of a first user;
the processor is further configured to send a function migration response to the first network node or the controller by using the transmitter;
the processor is further configured to receive, by using the receiver, a migration execution instruction sent by the first network node or the controller; and
the processor is further configured to execute the migration execution instruction to perform the first function service on the first user.

With reference to the ninth aspect, in a first possible implementation manner, the processor is further configured to:
receive, by using the receiver, a function migration file sent by the first network node or the controller; where
the function migration file received by the receiver includes at least one piece of the following information:
   a mirror program of the first function of the first user, configuration information of the first user, a radio air interface scheduling priority, service data information of the first user, or assured bandwidth of the first user.

With reference to the ninth aspect or the first possible implementation manner of the ninth aspect, in a second possible implementation manner, the function migration request received by the receiver carries an identifier of the first user and an identifier of the first function.

With reference to the second possible implementation manner of the ninth aspect, in a third possible implementation manner, the function migration request received by the receiver includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

In the foregoing solutions, a first network node or a controller actively sends a function migration request to the second network node, and the second network node sends a function migration response to the first network node or the controller. The first network node or the controller sends a migration execution instruction to the second network node, where the migration execution instruction is used to instruct the second network node to perform the first function service on the first user. Therefore, a network node or a controller of a network node can actively transfer a function service of a user between network nodes. In this way, a network can allocate an optimal network node to the user, and a burden on a busy network node can be reduced, so that performance of a function used by the user and network performance are improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of an application scenario according to an embodiment of the present invention;
FIG. 2 is a schematic flowchart of a function migration method according to an embodiment of the present invention;
FIG. 3 is a schematic flowchart of a function migration method according to another embodiment of the present invention;
FIG. 4 is a schematic flowchart of a function migration method according to still another embodiment of the present invention;
FIG. 5 is a schematic flowchart of a function migration method according to yet another embodiment of the present invention;
FIG. 6 is a schematic flowchart of a function migration method according to another embodiment of the present invention;
FIG. 7 is a signaling interworking diagram of a function migration method according to an embodiment of the present invention;
FIG. 8 is a signaling interworking diagram of a function migration method according to another embodiment of the present invention;
FIG. 9 is a signaling interworking diagram of a function migration method according to still another embodiment of the present invention;
FIG. 10 is a signaling interworking diagram of a function migration method according to yet another embodiment of the present invention;
FIG. 11 is a schematic structural diagram of a first network node according to an embodiment of the present invention;
FIG. 12 is a schematic structural diagram of a controller according to an embodiment of the present invention;
FIG. 13 is a schematic structural diagram of a second network node according to an embodiment of the present invention;
FIG. 14 is a schematic structural diagram of a first network node according to another embodiment of the present invention;
FIG. 15 is a schematic structural diagram of a controller according to another embodiment of the present invention;
FIG. 16 is a schematic structural diagram of a second network node according to another embodiment of the present invention;
FIG. 17 is a schematic structural diagram of a function migration system according to an embodiment of the present invention; and
FIG. 18 is a schematic structural diagram of a function migration system according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

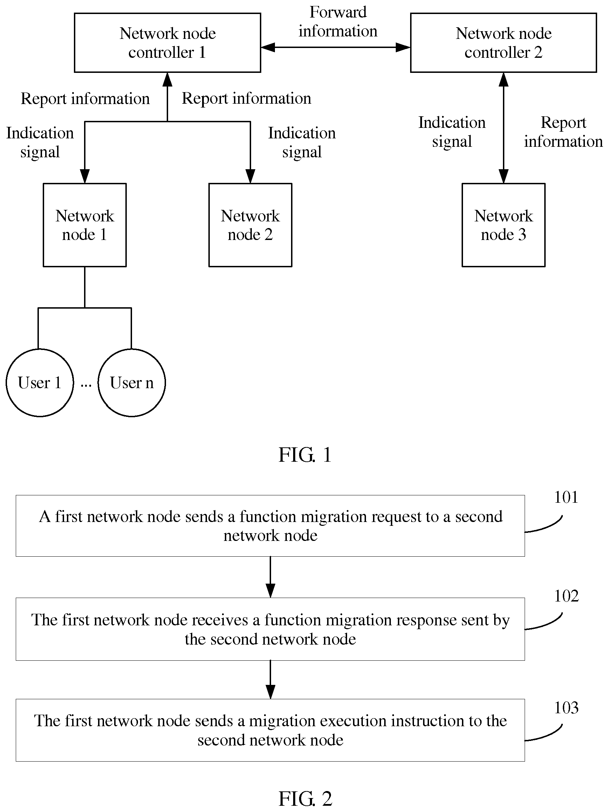

An embodiment of the present invention is applied to a network system with SDN and NFV functions. When a user uses a function service, an SDN may separate data of a control function from data of the user, so as to flexibly control a network. An NFV enables a network node to provide a function for the user by using a virtual machine instead of relying on a dedicated device. As shown in FIG. 1, the network system includes a network node and a network node controller. The network node is configured to provide a corresponding function service for the user; the network node controller is configured to send an indication signal to the network node, so as to control the network node; and the network node reports information to the network node controller. A network node controller may control a network node in a coverage area of the network node controller. The network node controller may also send an indication signal to another network node controller, and the indication signal is sent to a corresponding network node by the another network node controller. In this way, the network node controller may send, by using the another network node controller, indication information to a network node that is beyond the coverage area of the network node controller.

An embodiment of the present invention provides a function migration method. As shown in FIG. 2, the method includes the following steps.

101. A first network node sends a function migration request to a second network node.

Before sending the function migration request, the first network node determines whether work of the first network node is overloaded, or determines whether a transmission signal of a first function used by a first user is fine, so as to determine whether function migration needs to be performed.

The function migration request is used to request to migrate the first function of the first user.

Optionally, the function migration request may carry an identifier of the first user and an identifier of the first function.

Further optionally, the function migration request may further carry at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size. The information is provided for the second network node, so that the second network node can determine whether the second network node has a capability of supporting the first function of the first user.

102. The first network node receives a function migration response sent by the second network node.

The function migration response includes a response of accepting migration or a response of refusing migration. After receiving the function migration request sent by the first network node, the second network node determines whether the second network node has the capability of supporting the first function of the first user. If the second network node is capable of supporting the first function of the first user, the response of accepting migration is sent as the function migration response. If the second network node does not support the first function of the first user, the response of refusing migration is sent as the function migration response.

103. The first network node sends a migration execution instruction to the second network node.

The migration execution instruction is used to instruct the second network node to perform the first function service on the first user.

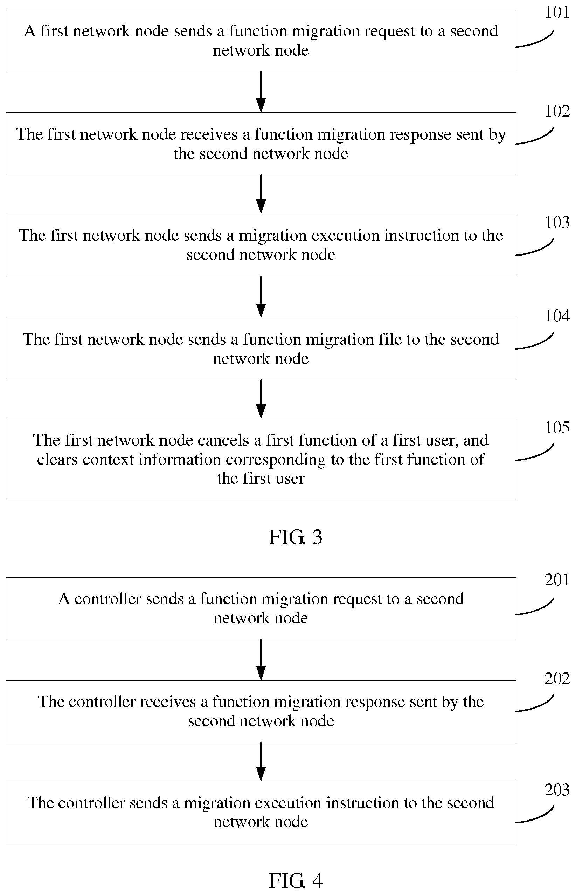

Optionally, as shown in FIG. 3, the method further includes:
104. The first network node sends a function migration file to the second network node.

The function migration file includes at least one piece of the following information:
a mirror program of the first function of the first user, configuration information of the first user, a radio air interface scheduling priority, service data information of the first user, or assured bandwidth of the first user.

When the first network node shares no information with the second network node, the first network node needs to send the function migration file to the second network node, that is, transfer function service information that is on the first network node and that is of the first user to the second network node.

Further optionally, the method further includes:
105. The first network node cancels a first function of a first user, and clears context information corresponding to the first function of the first user.

Because the second network node implements the first function on the first user, the first network ends the first function of the first user, and clears related information.

In the foregoing embodiment, a first network node actively determines to transfer a first function of a first user from the first network node to a second network node, and sends a function migration request to the second network node. If the function migration response received by the first network node is a response of accepting migration, the first network node sends a migration execution instruction to the second network node, where the migration execution instruction is used to instruct the second network node to perform the first function service on the first user. Therefore, a network node can actively transfer a function service of a user between network nodes. In this way, a network can allocate an optimal network node to the user, and a burden on a busy network node can be reduced, so that performance of a function used by the user and network performance are improved.

An embodiment of the present invention provides a function migration method. As shown in FIG. 4, the method includes the following steps.

201. A controller sends a function migration request to a second network node.

The controller determines whether work of a first network node is overloaded, or determines whether a transmission signal of a first function used by a first user is fine, so as to determine whether function migration needs to be performed. The controller is a device that may participate in a network control function, such as an SDN controller, a network controller, or a network manager, or a combination of these devices.

The function migration request is used to request to migrate the first function of the first user.

Optionally, the function migration request may carry an identifier of the first user and an identifier of the first function.

Further optionally, the function migration request may further carry at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size. The information is provided for the second network node, so that the second network node can determine whether the second network node has a capability of supporting the first function of the first user.

202. The controller receives a function migration response sent by the second network node.

The function migration response includes a response of accepting migration or a response of refusing migration. After receiving the function migration request sent by the controller, the second network node determines whether the second network node has the capability of supporting the first function of the first user. If the second network node is capable of supporting the first function of the first user, the response of accepting migration is sent as the function migration response. If the second network node does not support the first function of the first user, the response of refusing migration is sent as the function migration response.

203. The controller sends a migration execution instruction to the second network node.

The migration execution instruction is used to instruct the second network node to perform the first function service on the first user.

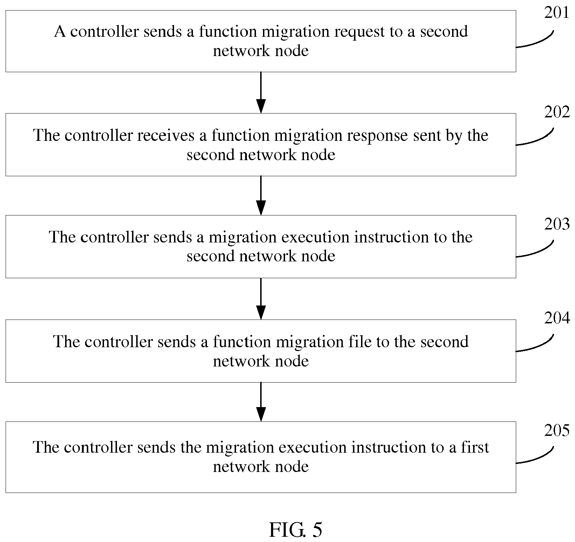

Optionally, as shown in FIG. 5, the method further includes:
204. The controller sends a function migration file to the second network node.

The function migration file includes at least one piece of the following information:
a mirror program of the first function of the first user, configuration information of the first user, a radio air interface scheduling priority, service data information of the first user, or assured bandwidth of the first user.

When the first network node shares no information with the second network node, a controller of the first network node needs to send the function migration file to the second network node. The controller of the first network node may obtain the function migration file from the first network node, that is, transfer function service information that is on the first network node and that is of the first user to the second network node.

Further optionally, if the function migration response received by the controller is the response of accepting migration, the method further includes:
205. The controller sends the migration execution instruction to the first network node.

The migration execution instruction is used to instruct the first network node to cancel the first function of the first user, and clear context information corresponding to the first function of the first user.

In the foregoing embodiment, a controller actively determines to transfer a first function of a first user from the first network node to a second network node, and sends a function migration request to the second network node. If the function migration response received by the controller is a response of accepting migration, the controller sends a migration execution instruction to the second network node, where the migration execution instruction is used to instruct the second network node to perform the first function service on the first user. Therefore, a controller of a network node can actively transfer a function service of a user between network nodes. In this way, a network can allocate an optimal network node to the user, and a burden on a busy network node can be reduced, so that performance of a function used by the user and network performance are improved.

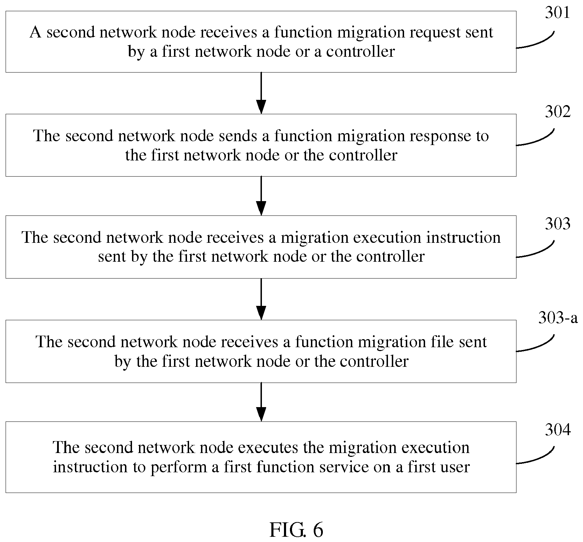

An embodiment of the present invention provides a function migration method. As shown in FIG. 6, the method includes the following steps.

301. A second network node receives a function migration request sent by a first network node or a controller.

The function migration request is used to request to migrate a first function of a first user.

Optionally, the function migration request received by the second network node carries an identifier of the first user and an identifier of the first function.

Further optionally, the function migration request may further carry at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

302. The second network node sends a function migration response to the first network node or the controller.

Referring to step 102 and step 202, if the second network node accepts the function migration request, the function migration response that is fed back is a response of accepting migration; if the second network node does not accept the function migration request, the function migration response that is fed back is a response of refusing migration.

303. The second network node receives a migration execution instruction sent by the first network node or the controller.

Optionally, the method further includes:
303-a. The second network node receives a function migration file sent by the first network node or the controller.

The function migration file includes at least one piece of the following information:
a mirror program of the first function of the first user, configuration information of the first user, a radio air interface scheduling priority, service data information of the first user, or assured bandwidth of the first user.

Specifically, referring to step 104 and step 105, if the second network node includes function service information that is on the first network node and that is of the first user, the function migration file does not need to be received. If the second network node does not have function service information that is on the first network node and that is of the first user, the function migration file sent by the first network node or the controller is received, so that the first user can use the first function without interruption.

304. The second network node executes the migration execution instruction to perform a first function service on a first user.

In the foregoing embodiment, a second network node receives a function migration request actively sent by a first network node or a controller. If a function migration response sent by the second network node is a response of accepting migration, the second network node receives a migration execution instruction sent by the first network node or the controller, where the migration execution instruction is used to instruct the second network node to perform the first function service on the first user. Therefore, a network node can actively transfer a function service of a user between network nodes. In this way, a network can allocate an optimal network node to the user, and a burden on a busy network node can be reduced, so that performance of a function used by the user and network performance are improved.

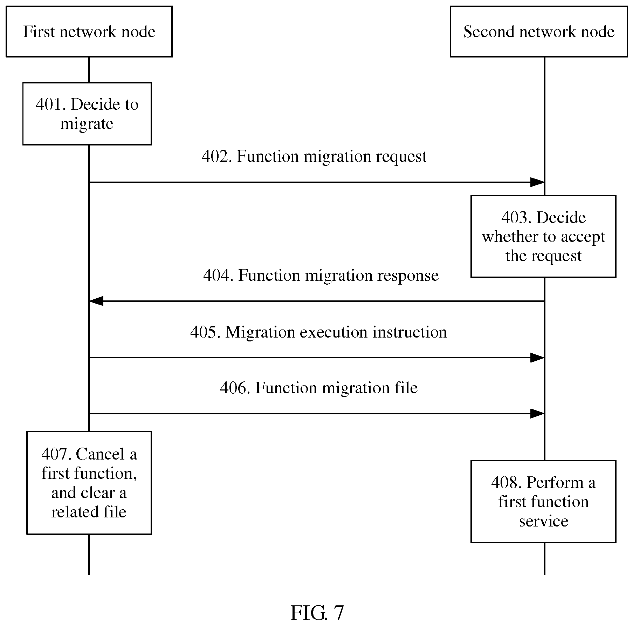

Exemplarily, an embodiment of the present invention provides a function migration method. As shown in FIG. 7, a first network node actively determines whether to migrate a first function of a first user. The first network node may exchange information with a second network node, and a function can be migrated without using a network node controller. The method includes the following steps.

401. The first network node determines to migrate the first function of the first user from the first network node to the second network node.

402. The first network node sends a function migration request to the second network node.

Correspondingly, the second network node receives the function migration request sent by the first network node. Specific description is in step 102, and details are not described herein again.

403. The second network node determines whether to accept the function migration request, and feeds back a function migration response to the first network node.

Specific description is in step 302, and details are not described herein again.

404. The first network node receives the function migration response sent by the second network node.

405. If the function migration response received by the first network node is a response of accepting migration, the first network node sends a migration execution instruction to the second network node.

Optionally, the method further includes:
406. The first network node sends a function migration file to the second network node.

Specific description is in step 104 and step 303-a, and details are not described herein again.

Optionally, the method further includes:
407. The first network node cancels the first function of the first user, and clears context information corresponding to the first function of the first user.
408. The second network node executes the migration execution instruction to perform a first function service on the first user.

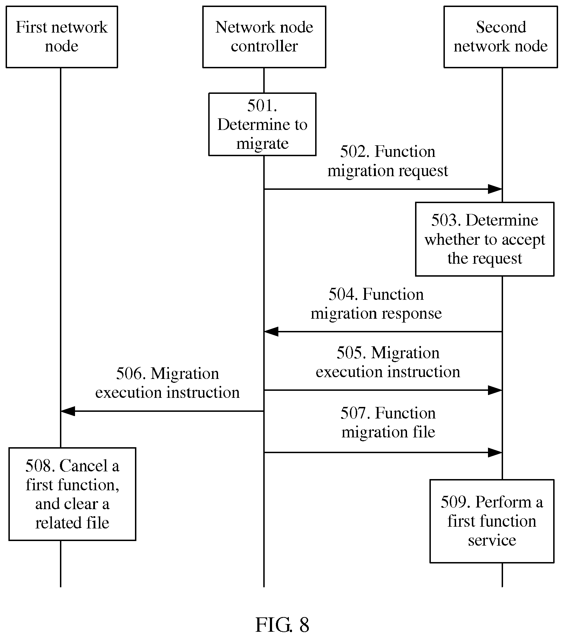

Further optionally, an embodiment of the present invention provides a function migration method. As shown in FIG. 8, a controller of a first network node actively determines whether to migrate a first function of a first user. The first network node shares a same network node controller with a second network node, that is, the network node controller is a controller of the first network node and a controller of the second network node. The method includes the following steps.

501. The network node controller determines to migrate the first function of the first user from the first network node to the second network node.

Specific description is in step 201, and details are not described herein again.

502. The network node controller sends a function migration request to the second network node.

Specific description is in step 201, and details are not described herein again.

503. The second network node determines whether to accept the function migration request, and feeds back a function migration response to the network node controller.

Specific description is in step 302, and details are not described herein again.

504. The network node controller receives the function migration response sent by the second network node.

505. If the function migration response received by the network node controller is a response of accepting migration, the first network node sends a migration execution instruction to the second network node.

Optionally, the method further includes:
506. The network node controller sends the migration execution instruction to the first network node.

Specific description is in step 205, and details are not described herein again.

Optionally, the method further includes:
507. The network node controller sends a function migration file to the second network node.

Specific description is in step 204 and step 303-a, and details are not described herein again.

508. The first network node cancels the first function of the first user, and clears context information corresponding to the first function of the first user.

509. The second network node executes the migration execution instruction to perform a first function service on the first user.

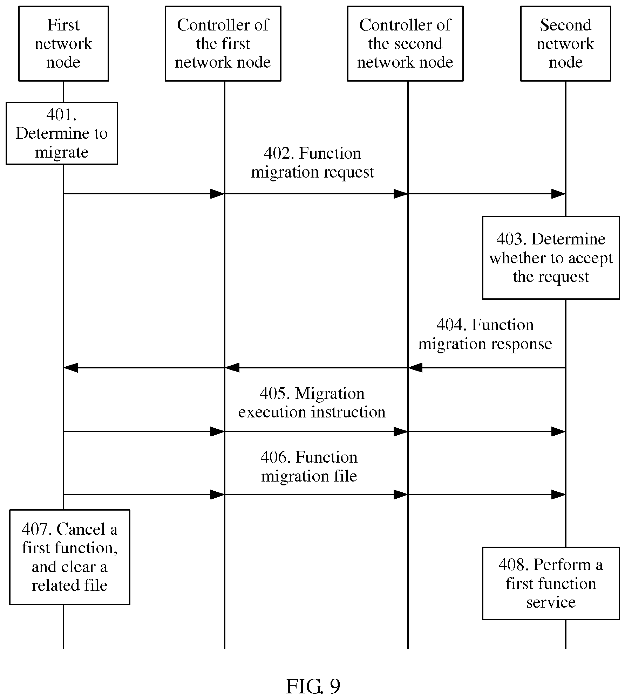

Further optionally, an embodiment of the present invention provides a function migration method. As shown in FIG. 9, a first network node actively determines whether to migrate a first function of a first user. The first network node and a second network node separately belong to different network node controllers, that is, a controller of the first network node is configured to control the first network node, and a controller of the second network node is configured to control the second network node. Steps of this embodiment are the same as step 401 to step 408 of the embodiment corresponding to FIG. 7, and details are not described herein again. A difference lies in that the first network node is not capable of directly exchanging information with the second network node, and forwarding needs to be performed by using the network node controller. That is, information of the first network node needs to be sent to the controller of the first network node, and then sent to the controller of the second network node by the controller of the first network node, and finally the controller of the second network node forwards the information to the second network node. Similarly, information of the second network node needs to be sent to the controller of the second network node, and then sent to the controller of the first network node by the controller of the second network node, and finally the controller of the first network node forwards the information to the first network node. In this way, the controller of the first network node and the controller of the second network node play a role of forwarding.

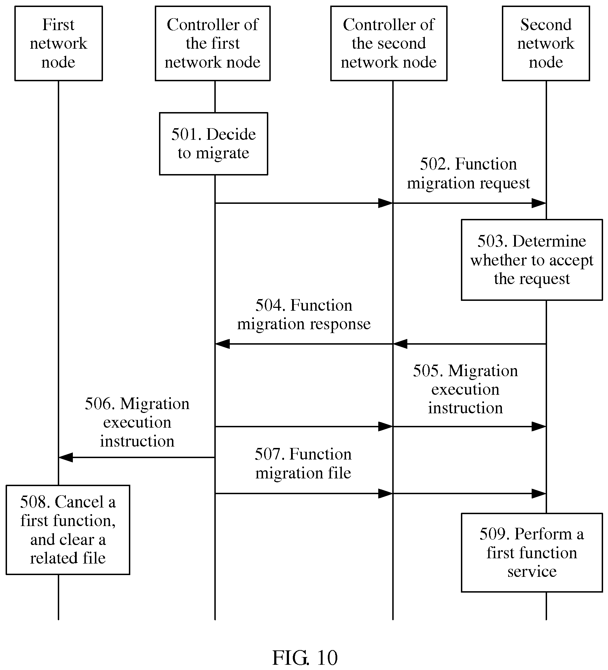

Further optionally, an embodiment of the present invention provides a function migration method. As shown in FIG. 10, a controller of a first network node actively determines whether to migrate a first function of a first user. The first network node and a second network node separately belong to different network node controllers, that is, the controller of the first network node is configured to control the first network node, and a controller of the second network node is configured to control the second network node. Steps of this embodiment are the same as step 501 to step 509 of the embodiment corresponding to FIG. 8, and details are not described herein again. A difference lies in that the controller of the first network node is not capable of directly exchanging information with the second network node, and forwarding needs to be performed by using the controller of the second network node. That is, information of the controller of the first network node needs to be sent to the controller of the second network node, and then the controller of the second network node forwards the information to the second network node. Similarly, information of the second network node needs to be sent to the controller of the second network node, and then sent to the controller of the first network node by the controller of the second network node. In this way, the controller of the second network node plays a role of forwarding.

In the foregoing embodiments, a first network node or a controller of a first network node actively determines to migrate a first function of a first user from the first network node to a second network node, and sends a function migration request to the second network node. The second network node determines whether to accept function migration. If the function migration response received by the first network node or the controller of the first network node is a response of accepting migration, the first network node or the controller of the first network node sends a migration execution instruction to the second network node, where the migration execution instruction is used to instruct the second network node to perform the first function service on the first user. Therefore, a network node or a controller of a network node can actively transfer a function service of a user between network nodes. In this way, a network can allocate an optimal network node to the user, and a burden on a busy network node can be reduced, so that performance of a function used by the user and network performance are improved.

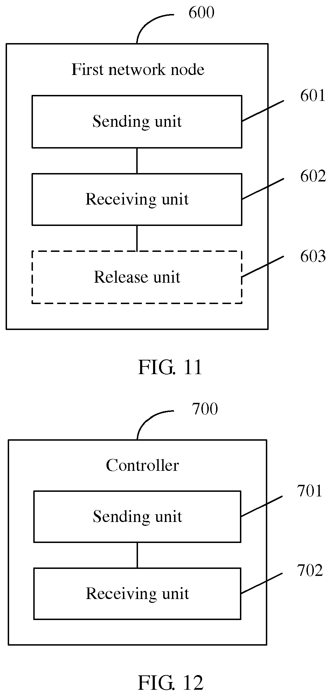

An embodiment of the present invention provides a first network node 600 that is configured to migrate a first function that is used by a first user and that is on the first network node 600 to a second network node. As shown in FIG. 11, the network node includes a sending unit 601 and a receiving unit 602.

The sending unit 601 is configured to send a function migration request to the second network node.

The function migration request is used to request to migrate the first function of the first user.

Optionally, the function migration request sent by the sending unit 601 carries an identifier of the first user and an identifier of the first function.

Further optionally, the function migration request sent by the sending unit includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

The receiving unit 602 is configured to receive a function migration response sent by the second network node.

After receiving the function migration request sent by the first network node, the second network node determines whether the second network node has a capability of supporting the first function of the first user. If the second network node is capable of supporting the first function of the first user, a response of accepting migration is sent as the function migration response. If the second network node does not support the first function of the first user, a response of refusing migration is sent as the function migration response.

The sending unit 601 is further configured to send a migration execution instruction to the second network node.

The migration execution instruction is used to instruct the second network node to perform a first function service on the first user.

Optionally, the sending unit 601 is further configured to send a function migration file to the second network node.

The function migration file sent by the sending unit 601 includes at least one piece of the following information:
a mirror program of the first function of the first user, configuration information of the first user, a radio air interface scheduling priority, service data information of the first user, or assured bandwidth of the first user.

When the first network node shares no information with the second network node, the first network node needs to send the function migration file to the second network node, that is, transfer function service information that is on the first network node and that is of the first user to the second network node.

Further optionally, the first network node 600 further includes:
a release unit 603, configured to: cancel the first function of the first user, and clear context information corresponding to the first function of the first user.

Because the second network node implements the first function on the first user, the first network ends the first function of the first user, and clears related information.

In the foregoing embodiment, a first network node actively determines to transfer a first function of a first user from the first network node to a second network node, and sends a function migration request to the second network node. If the function migration response received by the first network node is a response of accepting migration, the first network node sends a migration execution instruction to the second network node, where the migration execution instruction is used to instruct the second network node to perform the first function service on the first user. Therefore, a network node can actively transfer a function service of a user between network nodes. In this way, a network can allocate an optimal network node to the user, and a burden on a busy network node can be reduced, so that performance of a function used by the user and network performance are improved.

An embodiment of the present invention provides a controller 700 that is configured to migrate a first function that is used by a first user and that is on a first network node to a second network node. As shown in FIG. 12, the controller 700 includes a sending unit 701 and a receiving unit 702.

The sending unit 701 is configured to send a function migration request to the second network node.

The function migration request is used to request to migrate the first function of the first user.

Optionally, the function migration request sent by the sending unit 701 carries an identifier of the first user and an identifier of the first function.

Further optionally, the function migration request sent by the sending unit includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

The receiving unit 702 is configured to receive a function migration response sent by the second network node.

After receiving the function migration request sent by the controller, the second network node determines whether the second network node has a capability of supporting the first function of the first user. If the second network node is capable of supporting the first function of the first user, a response of accepting migration is sent as the function migration response. If the second network node does not support the first function of the first user, a response of refusing migration is sent as the function migration response.

The sending unit 701 is further configured to send a migration execution instruction to the second network node.

The migration execution instruction is used to instruct the second network node to perform the first function service on the first user.

Optionally, the sending unit 701 is further configured to send a function migration file to the second network node.

The function migration file sent by the sending unit 701 includes at least one piece of the following information:
a mirror program of the first function of the first user, configuration information of the first user, a radio air interface scheduling priority, service data information of the first user, or assured bandwidth of the first user.

When the first network node shares no information with the second network node, a controller of the first network node needs to send the function migration file to the second network node. The controller of the first network node may obtain the function migration file from the first network node, that is, transfer function service information that is on the first network node and that is of the first user to the second network node.

Further optionally, the sending unit 701 is further configured to send the migration execution instruction to the first network node.

The migration execution instruction is used to instruct the first network node to cancel the first function of the first user, and clear context information corresponding to the first function of the first user.

In the foregoing embodiment, a controller actively determines to transfer a first function of a first user from the first network node to a second network node, and sends a function migration request to the second network node. If the function migration response received by the controller is a response of accepting migration, the controller sends a migration execution instruction to the second network node, where the migration execution instruction is used to instruct the second network node to perform the first function service on the first user. Therefore, a controller of a network node can actively transfer a function service of a user between network nodes. In this way, a network can allocate an optimal network node to the user, and a burden on a busy network node can be reduced, so that performance of a function used by the user and network performance are improved.

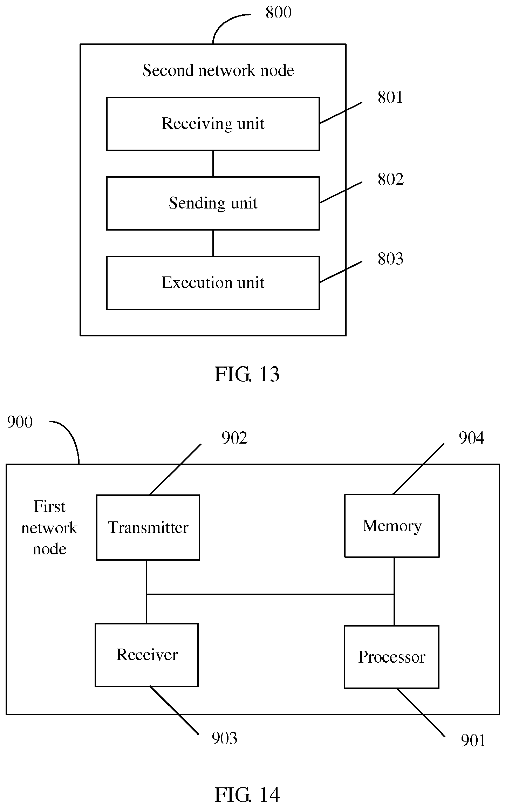

An embodiment of the present invention provides a second network node 800. As shown in FIG. 13, the second network node 800 is configured to migrate a first function of a first user on a first network node to a local second network node. The second network node 800 includes a receiving unit 801, a sending unit 802, and an execution unit 803.

The receiving unit 801 is configured to receive a function migration request sent by the first network node or a controller.

The function migration request is used to request to migrate the first function of the first user.

Optionally, the function migration request received by the receiving unit 801 carries an identifier of the first user and an identifier of the first function.

Further optionally, the function migration request may further carry at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

The sending unit 802 is configured to send a function migration response to the first network node or the controller.

After receiving the function migration request sent by the controller, the second network node determines whether the second network node has a capability of supporting the first function of the first user. If the second network node is capable of supporting the first function of the first user, a response of accepting migration is sent as the function migration response. If the second network node does not support the first function of the first user, a response of refusing migration is sent as the function migration response.

The receiving unit 801 is further configured to receive a migration execution instruction sent by the first network node or the controller.

Optionally, the receiving unit 801 is further configured to:
receive a function migration file sent by the first network node or the controller.

The function migration file received by the receiving unit 801 includes at least one piece of the following information:
a mirror program of the first function of the first user, configuration information of the first user, a radio air interface scheduling priority, service data information of the first user, or assured bandwidth of the first user.

If the second network node includes function service information that is on the first network node and that is of the first user, the function migration file does not need to be received. If the second network node does not have function service information that is on the first network node and that is of the first user, the function migration file sent by the first network node or the controller is received, so that the first user can use the first function without interruption.

The execution unit 803 is configured to execute the migration execution instruction to perform a first function service on the first user.

In the foregoing embodiment, a second network node receives a function migration request actively sent by a first network node or a controller. If a function migration response sent by the second network node is a response of accepting migration, the second network node receives a migration execution instruction sent by the first network node or the controller, where the migration execution instruction is used to instruct the second network node to perform the first function service on the first user. Therefore, a network node can actively transfer a function service of a user between network nodes. In this way, a network can allocate an optimal network node to the user, and a burden on a busy network node can be reduced, so that performance of a function used by the user and network performance are improved.

An embodiment of the present invention provides a first network node 900. As shown in FIG. 14, the first network node 900 includes a processor 901, a transmitter 902, a receiver 903, and a memory 904, where the processor 901, the transmitter 902, the memory 903, and the memory 904 are connected to each other, and the memory 904 is configured to store code. When performing an operation, the processor 901 needs to invoke the corresponding code stored in the memory 904, so as to implement a corresponding function.

Specifically, the memory 904 is configured to store executable program code, and the program code includes computer operation instructions. The memory 904 may include a high-speed RAM memory, and may further include a non-volatile memory (non-volatile memory) such as at least one disk memory.

The processor 901 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 901 is configured to send a function migration request to a second network node by using the transmitter 902.

The function migration request is used to request to migrate a first function of a first user.

Optionally, the function migration request sent by the transmitter 902 carries an identifier of the first user and an identifier of the first function.

Further optionally, the function migration request sent by the transmitter 902 includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

When performing the operation, the processor 901 invokes the code stored in the memory 904, and sends the function migration request by using the transmitter 902, so as to implement the foregoing function of sending the function migration request.

The processor 901 is further configured to receive, by using the receiver, a function migration response sent by the second network node.

When performing the operation, the processor 901 invokes the code stored in the memory 904, and receives the function migration response by using the receiver 903, so as to implement the foregoing function of receiving the function migration response.

After receiving the function migration request sent by the first network node, the second network node determines whether the second network node has a capability of supporting the first function of the first user. If the second network node is capable of supporting the first function of the first user, a response of accepting migration is sent as the function migration response. If the second network node does not support the first function of the first user, a response of refusing migration is sent as the function migration response.

The processor 901 is further configured to send a migration execution instruction to the second network node by using the transmitter.

The migration execution instruction is used to instruct the second network node to perform the first function service on the first user. When performing the operation, the processor 901 invokes the code stored in the memory 904, and sends the migration execution instruction by using the transmitter 902, so as to implement the foregoing function of sending the migration execution instruction.

Optionally, the processor 901 is further configured to send a function migration file to the second network node by using the transmitter 902.

The function migration file sent by the transmitter 901 includes at least one piece of the following information:
a mirror program of the first function of the first user, configuration information of the first user, a radio air interface scheduling priority, service data information of the first user, or assured bandwidth of the first user.

When the first network node shares no information with the second network node, the first network node needs to send the function migration file to the second network node, that is, transfer function service information that is on the first network node and that is of the first user to the second network node.

When performing the operation, the processor 1001 invokes the code stored in the memory 1004, and sends the function migration file by using the transmitter 1002, so as to implement the foregoing function of sending the function migration file.

Further optionally, the processor 901 is further configured to:
cancel the first function of the first user, and clear context information corresponding to the first function of the first user.

When performing the operation, the processor 901 invokes the code stored in the memory 904, so as to implement the foregoing function of releasing the first function of the first user.

Because the second network node implements the first function on the first user, the first network ends the first function of the first user, and clears related information.

In the foregoing embodiment, a first network node actively determines to transfer a first function of a first user from the first network node to a second network node, and sends a function migration request to the second network node. If the function migration response received by the first network node is a response of accepting migration, the first network node sends a migration execution instruction to the second network node, where the migration execution instruction is used to instruct the second network node to perform the first function service on the first user. Therefore, a network node can actively transfer a function service of a user between network nodes. In this way, a network can allocate an optimal network node to the user, and a burden on a busy network node can be reduced, so that performance of a function used by the user and network performance are improved.

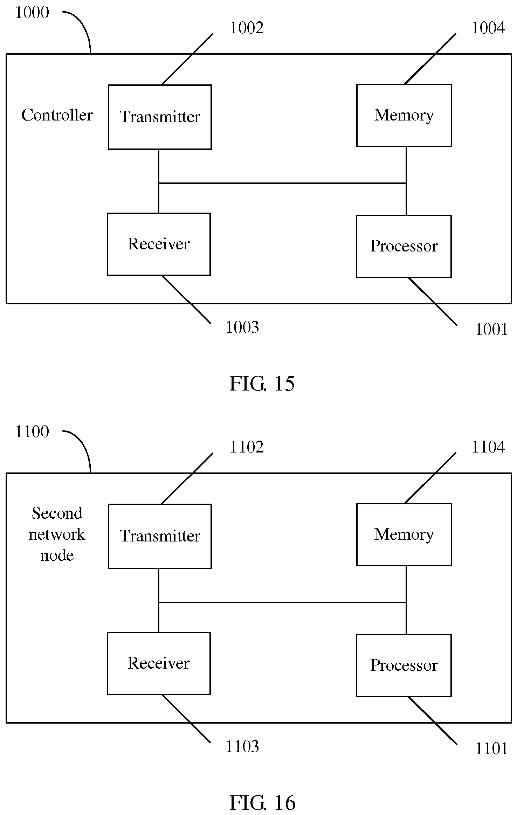

An embodiment of the present invention provides a controller 1000. As shown in FIG. 15, the controller 1000 includes a processor 1001, a transmitter 1002, a receiver 1003, and a memory 1004, where the processor 1001, the transmitter 1002, the memory 1003, and the memory 1004 are connected to each other, and the memory 1004 is configured to store code. When performing an operation, the processor 1001 needs to invoke the corresponding code stored in the memory 1004, so as to implement a corresponding function.

Specifically, the memory 1004 is configured to store executable program code, and the program code includes computer operation instructions. The memory 1004 may include a high-speed RAM memory, and may further include a non-volatile memory (non-volatile memory) such as at least one disk memory.

The processor 1001 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 1001 is configured to send a function migration request to a second network node by using the transmitter 1002.

The function migration request is used to request to migrate a first function of a first user.

Optionally, the function migration request sent by the sending unit 1002 carries an identifier of the first user and an identifier of the first function.

Further optionally, the function migration request sent by the transmitter 1002 includes at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

When performing the operation, the processor 1001 invokes the code stored in the memory 1004, and sends the function migration request by using the transmitter 1002, so as to implement the foregoing function of sending the function migration request.

The processor 1001 is configured to receive, by using the receiver 1003, a function migration response sent by the second network node.

When performing the operation, the processor 1001 invokes the code stored in the memory 1004, and receives the function migration response by using the receiver 1003, so as to implement the foregoing function of receiving the function migration response.

After receiving the function migration request sent by the controller, the second network node determines whether the second network node has a capability of supporting the first function of the first user. If the second network node is capable of supporting the first function of the first user, a response of accepting migration is sent as the function migration response. If the second network node does not support the first function of the first user, a response of refusing migration is sent as the function migration response.

The processor 1001 is further configured to send a migration execution instruction to the second network node by using the transmitter 1002.

The migration execution instruction is used to instruct the second network node to perform the first function service on the first user. When performing the operation, the processor 1001 invokes the code stored in the memory 1004, and sends the migration execution instruction by using the transmitter 1002, so as to implement the foregoing function of sending the migration execution instruction.

Optionally, the processor 1001 is further configured to send a function migration file to the second network node by using the transmitter 1002.

The function migration file sent by the transmitter 1002 includes at least one piece of the following information:
a mirror program of the first function of the first user, configuration information of the first user, a radio air interface scheduling priority, service data information of the first user, or assured bandwidth of the first user.

When the first network node shares no information with the second network node, a controller of the first network node needs to send the function migration file to the second network node. The controller of the first network node may obtain the function migration file from the first network node, that is, transfer function service information that is on the first network node and that is of the first user to the second network node.

When performing the operation, the processor 1001 invokes the code stored in the memory 1004, and sends the function migration file by using the transmitter 1002, so as to implement the foregoing function of sending the function migration file.

Further optionally, the processor 1001 is further configured to send a migration execution instruction to the first network node by using the transmitter 1002.

When performing the operation, the processor 1001 invokes the code stored in the memory 1004, and sends the migration execution instruction by using the transmitter 1002, so as to implement the foregoing function of sending the migration execution instruction.

The migration execution instruction is used to instruct the first network node to cancel the first function of the first user, and clear context information corresponding to the first function of the first user.

In the foregoing embodiment, a controller actively determines to transfer a first function of a first user from the first network node to a second network node, and sends a function migration request to the second network node. If the function migration response received by the controller is a response of accepting migration, the controller sends a migration execution instruction to the second network node, where the migration execution instruction is used to instruct the second network node to perform the first function service on the first user. Therefore, a controller of a network node can actively transfer a function service of a user between network nodes. In this way, a network can allocate an optimal network node to the user, and a burden on a busy network node can be reduced, so that performance of a function used by the user and network performance are improved.

An embodiment of the present invention provides a second network node 1100. As shown in FIG. 16, the second network node 1100 includes a processor 1101, a transmitter 1102, a receiver 1103, and a memory 1104, where the processor 1101, the transmitter 1102, the memory 1103, and the memory 1104 are connected to each other, and the memory 1104 is configured to store code. When performing an operation, the processor 1101 needs to invoke the corresponding code stored in the memory 1104, so as to implement a corresponding function.

Specifically, the memory 1104 is configured to store executable program code, and the program code includes computer operation instructions. The memory 1104 may include a high-speed RAM memory, and may further include a non-volatile memory (non-volatile memory) such as at least one disk memory.

The processor 1101 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 1101 is configured to receive, by using the receiver 1103, a function migration request sent by a first network node or a controller.

The function migration request is used to request to migrate a first function of a first user.

Optionally, the function migration request received by the receiver 1103 carries an identifier of the first user and an identifier of the first function.

Further optionally, the function migration request may further carry at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

When performing the operation, the processor 1101 invokes the code stored in the memory 1104, and receives the function migration request by using the receiver 1103, so as to implement the foregoing function of receiving the function migration request.

The processor 1101 sends a function migration response to the first network node or the controller by using the transmitter 1102.

When performing the operation, the processor 1101 invokes the code stored in the memory 1104, and sends the function migration response by using the transmitter 1102, so as to implement the foregoing function of sending the function migration response.

After receiving the function migration request sent by the controller, the second network node determines whether the second network node has a capability of supporting the first function of the first user. If the second network node is capable of supporting the first function of the first user, a response of accepting migration is sent as the function migration response. If the second network node does not support the first function of the first user, a response of refusing migration is sent as the function migration response.

The processor 1101 is further configured to receive, by using the receiver 1103, a migration execution instruction sent by the first network node or the controller.

Optionally, the receiver 1103 is further configured to:
receive a function migration file sent by the first network node or the controller.

The function migration file received by the receiver 1103 includes at least one piece of the following information:
a mirror program of the first function of the first user, configuration information of the first user, a radio air interface scheduling priority, service data information of the first user, or assured bandwidth of the first user.

When performing the operation, the processor 1101 invokes the code stored in the memory 1104, and receives the function migration file by using the receiver 1103, so as to implement the foregoing function of receiving the function migration file.

If the second network node includes function service information that is on the first network node and that is of the first user, the function migration file does not need to be received. If the second network node does not have function service information that is on the first network node and that is of the first user, the function migration file sent by the first network node or the controller is received, so that the first user can use the first function without interruption.

The processor 1101 is further configured to execute the migration execution instruction to perform a first function service on the first user.

When performing the operation, the processor 1101 invokes the code stored in the memory 1104, so as to implement the first function of the first user.

In the foregoing embodiment, a second network node receives a function migration request actively sent by a first network node or a controller. If a function migration response sent by the second network node is a response of accepting migration, the second network node receives a migration execution instruction sent by the first network node or the controller, where the migration execution instruction is used to instruct the second network node to perform the first function service on the first user. Therefore, a network node can actively transfer a function service of a user between network nodes. In this way, a network can allocate an optimal network node to the user, and a burden on a busy network node can be reduced, so that performance of a function used by the user and network performance are improved.

An embodiment of the present invention provides a function migration system that includes:
at least one first network node 1201, and at least one second network node 1202.

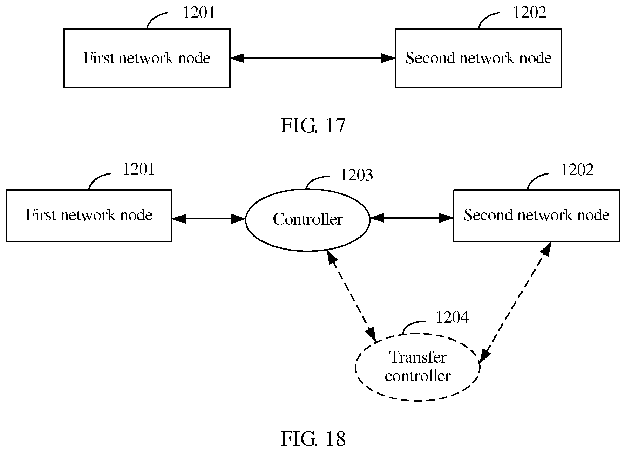

In a function migration system of a first type, as shown in FIG. 17, the first network node 1201 may directly exchange information with the second network node 1202, which is applied to the embodiment corresponding to FIG. 7.

In the function migration system of the first type, the first network node 1201 is the first network node 600 corresponding to FIG. 11, and the second network node 1202 is the first network node 800 corresponding to FIG. 13; or the first network node 1201 is the first network node 900 corresponding to FIG. 14, and the second network node 1202 is the first network node 1100 corresponding to FIG. 16.

Optionally, as shown in FIG. 18, a function migration system of a second type further includes a controller 1203. The first network network 1201 needs to exchange information with the second network node 1202 by using the controller 1203, which is applied to the embodiment corresponding to FIG. 8.

In the function migration system of the second type, the first network node 1201 is the first network node 600 corresponding to FIG. 11, the second network node 1202 is the first network node 800 corresponding to FIG. 13, and the controller 1203 is the controller 700 corresponding to FIG. 12; or the first network node 1201 is the first network node 900 corresponding to FIG. 14, the second network node 1202 is the first network node 1100 corresponding to FIG. 16, and the controller 1203 is the controller 1000 corresponding to FIG. 12.

Further, when the first network node 1201 and the second network node 1202 do not belong to a coverage area of a same controller, a message needs to be transferred by using another transfer controller 1204 (identified by a dashed-line elliptic box in FIG. 18), which is applied to a scenario corresponding to FIG. 9 or FIG. 10.

In the foregoing system, a first network node or a controller actively sends a function migration request to the second network node, the second network node sends a function migration response to the first network node or the controller, and the first network node or the controller sends a migration execution instruction to the second network node, where the migration execution instruction is used to instruct the second network node to perform the first function service on the first user. Therefore, a network node or a controller of a network node can actively transfer a function service of a user between network nodes. In this way, a network can allocate an optimal network node to the user, and a burden on a busy network node can be reduced, so that performance of a function used by the user and network performance are improved.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention is subject to the protection scope of the claims.

## Claims

1. A function migration method, comprising:
sending, by a first network node, a function migration request to a second network node, wherein the function migration request is used to request to migrate a first function of a first user;
receiving, by the first network node, a function migration response sent by the second network node; and
sending, by the first network node, a migration execution instruction to the second network node, wherein the migration execution instruction is used to instruct the second network node to perform the first function service on the first user.

2. The method according to claim 1, wherein the method further comprises:
sending, by the first network node, a function migration file to the second network node, wherein
the function migration file comprises at least one piece of the following information:
a mirror program of the first function of the first user, configuration information of the first user, a radio air interface scheduling priority, service data information of the first user, or assured bandwidth of the first user.

3. The method according to claim 1 or 2, wherein the method further comprises:
canceling, by the first network node, the first function of the first user, and clearing context information corresponding to the first function of the first user.

4. The method according to any one of claims 1 to 3, wherein the function migration request sent by the first network node to the second network node carries an identifier of the first user and an identifier of the first function.

5. The method according to claim 4, wherein the function migration request comprises at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

6. A function migration method, comprising:
sending, by a controller, a function migration request to a second network node, wherein the function migration request is used to request to migrate a first function of a first user;
receiving, by the controller, a function migration response sent by the second network node; and
sending, by the controller, a migration execution instruction to the second network node, wherein the migration execution instruction is used to instruct the second network node to perform the first function service on the first user.

7. The method according to claim 6, wherein the method further comprises:
sending, by the controller, a function migration file to the second network node, wherein
the function migration file comprises at least one piece of the following information:
a mirror program of the first function of the first user, configuration information of the first user, a radio air interface scheduling priority, service data information of the first user, or assured bandwidth of the first user.

8. The method according to claim 6 or 7, wherein the method further comprises:
sending, by the controller, the migration execution instruction to the first network node, wherein the migration execution instruction is used to instruct the first network node to cancel the first function of the first user, and clear context information corresponding to the first function of the first user.

9. The method according to any one of claims 6 to 8, wherein the function migration request sent by the controller to the second network node carries an identifier of the first user and an identifier of the first function.

10. The method according to claim 9, wherein the function migration request comprises at least one piece of the following information:
an interface for migration of a virtual machine at an application layer, a virtual machine identification, a bandwidth allocation interface, a bandwidth size, a radio air interface scheduling priority interface, an air interface scheduling priority, or a delay size.

11. A function migration method, comprising:
receiving, by a second network node, a function migration request sent by a first network node or a controller, wherein the function migration request is used to request to migrate a first function of a first user;
sending, by the second network node, a function migration response to the first network node or the controller;
receiving a migration execution instruction sent by the first network node or the controller; and
executing, by the second network node, the migration execution instruction to perform the first function service on the first user.

12. The method according to claim 11, comprising:
receiving, by the second network node, a function migration file sent by the first network node or the controller, wherein
the function migration file comprises at least one piece of the following information:
a mirror program of the first function of the first user, configuration information of the first user, a radio air interface scheduling priority, service data information of the first user, or assured bandwidth of the first user.

13. A first network node, comprising:
a sending unit, configured to send a function migration request to a second network node, wherein the function migration request is used to request to migrate a first function of a first user; and
a receiving unit, configured to receive a function migration response sent by the second network node; and
the sending unit is further configured to send a migration execution instruction to the second network node, wherein the migration execution instruction is used to instruct the second network node to perform the first function service on the first user.

14. A controller, comprising:
a sending unit, configured to send a function migration request to a second network node, wherein the function migration request is used to request to migrate a first function of a first user; and
a receiving unit, configured to receive a function migration response sent by the second network node; and
the sending unit is further configured to send a migration execution instruction to the second network node, wherein the migration execution instruction is used to instruct the second network node to perform the first function service on the first user.

15. A second network node, comprising:
a receiving unit, configured to receive a function migration request sent by a first network node or a controller, wherein the function migration request is used to request to migrate a first function of a first user;
a sending unit, configured to send a function migration response to the first network node or the controller, wherein
the receiving unit is further configured to receive a migration execution instruction sent by the first network node or the controller; and
an execution unit, configured to execute the migration execution instruction to perform the first function service on the first user.

## Patentansprüche

1. Verfahren für eine Funktionsmigration, umfassend:
Senden einer Funktionsmigrationsanfrage von einem ersten Netzwerkknoten an einen zweiten Netzwerkknoten, wobei die Funktionsmigrationsanfrage verwendet wird, um anzufragen, dass eine erste Funktion eines ersten Benutzers migriert wird;
Empfangen in dem ersten Netzwerkknoten einer Funktionsmigrationsantwort, die von dem zweiten Netzwerkknoten gesendet wird; und
Senden einer Migrationsausführungsanweisung von dem ersten Netzwerkknoten an den zweiten Netzwerkknoten, wobei die Migrationsausführungsanweisung verwendet wird, um den zweiten Netzwerkknoten anzuweisen, den ersten Funktionsdienst für den ersten Benutzer auszuführen.

2. Verfahren nach Anspruch 1, wobei das Verfahren außerdem umfasst:
Senden einer Funktionsmigrationsdatei von dem ersten Netzwerkknoten an den zweiten Netzwerkknoten, wobei
die Funktionsmigrationsdatei mindestens ein Element der folgenden Informationen umfasst:
ein Spiegelprogramm der ersten Funktion des ersten Benutzers, Konfigurationsinformationen des ersten Benutzers, eine Planungspriorität einer Funkschnittstelle, Dienstdateninformationen des ersten Benutzers oder eine gesicherte Bandbreite des ersten Benutzers.

3. Verfahren nach Anspruch 1 oder 2, wobei das Verfahren außerdem umfasst:
Löschen der ersten Funktion des ersten Benutzers durch den ersten Netzwerkknoten und Entfernen von Kontextinformationen, die der ersten Funktion des ersten Benutzers entsprechen.

4. Verfahren nach einem der Ansprüche 1 bis 3, wobei die Funktionsmigrationsanfrage, die von dem ersten Netzwerkknoten an den zweiten Netzwerkknoten gesendet wird, eine Kennung des ersten Benutzers und eine Kennung der ersten Funktion mitführt.

5. Verfahren nach Anspruch 4, wobei die Funktionsmigrationsanfrage mindestens ein Element der folgenden Informationen umfasst:
eine Schnittstelle für eine Migration einer virtuellen Maschine in einer Anmeldungsschicht, eine Kennung einer virtuellen Maschine, eine Bandbreitenzuteilungsschnittstelle, eine Bandbreitengröße, eine Planungsprioritätsschnittstelle einer Funkschnittstelle, eine Planungspriorität einer Luftschnittstelle oder eine verzögerungsgröße.

6. Verfahren für eine Funktionsmigration, umfassend:
Sender einer Funktionsmigrationsanfrage von einer Steuereinheit an einen zweiten Netzwerkknoten, wobei die Funktionsmigrationsanfrage verwendet wird, um anzufragen, dass eine erste Funktion eines ersten Benutzers migriert wird;
Empfangen in der Steuereinheit einer Funktionsmigrationsantwort, die von dem zweiten Netzwerkknoten gesendet wird; und
Senden einer Migrationsausführungsanweisung von der Steuereinheit an den zweiten Netzwerkknoten, wobei die Migrationsausführungsanweisung verwendet wird, um den zweiten Netzwerkknoten anzuweisen, den ersten Funktionsdienst für den ersten Benutzer auszuführen.

7. Verfahren nach Anspruch 6, wobei das Verfahren außerdem umfasst:
Senden einer Funktionsmigrationsdatei von der Steuereinheit an den zweiten Netzwerkknoten, wobei
die Funktionsmigrationsdatei mindestens ein Element der folgenden Informationen umfasst:
ein Spiegelprogramm der ersten Funktion des ersten Benutzers, Konfigurationsinformationen des ersten Benutzers, eine Planungspriorität einer Funkschnittstelle, Dienstdateninformationen des ersten Benutzers oder eine gesicherte Bandbreite des ersten Benutzers.

8. Verfahren nach Anspruch 6 oder 7, wobei das Verfahren außerdem umfasst:
Senden der Migrationsausführungsanweisung von der Steuereinheit an den ersten Netzwerkknoten, wobei di Migrationsausführungsanweisung verwendet wird, um den ersten Netzwerkknoten anzuweisen, um die erste Funktion des ersten Benutzers zu löschen und um die Kontexinformationen zu ertfernen, die der ersten Funktion des ersten Benutzers entsprechen.

9. Verfahren nach einem der Ansprüche 6 bis 8, wobei die Funktionsmigrationsanfrage, die von der Steuereinheit an den zweiten Netzwerkknoten gesendet wird, eine Kennung des ersten Benutzers und eine Kennung der ersten Funktion mitführt.

10. Verfahren nach Anspruch 9, wobei die Funktionsmigrationsanfrage mindestens ein Element der folgenden Informationen umfasst:
eine Schnittstelle für eine Migration einer virtuellen Maschine in einer Anmeldungsschicht, eine Kennung einer virtuellen Maschine, eine Bandbreitenzuteilungsschnittstelle, eine Bandbreitengröße, eine Planungsprioritätsschnittstelle einer Funkschnittstelle, eine Planungspriorität einer Luftschnittstelle oder eine Verzögerungsgröße.

11. Verfahren für eine Funktionsmigration, umfassend:
Empfangen in einem zweiten Netzwerkknoten einer Funktionsmigrationsanfrage, die von einem ersten Netzwerkknoten oder einer Steuereinheit gesendet wird; und wobei die Funktionsmigrationsanfrage verwendet wird, um anzufragen, dass eine erste Funktion eines ersten Benutzers migriert wird;
Senden einer Funktionsmigrationsantwort von dem zweiten Netzwerkknoten an den ersten Netzwerkknoten oder an die Steuereinheit,
Empfangen einer Migrationsausführungsanweisung, die von dem ersten Netzwerkknoten oder der Steuereinheit gesendet wird; und
Ausführen der Migrationsausführungsanweisung durch den zweiten Netzwerkknoten, um den ersten Funktionsdienst für den ersten Benutzer auszuführen.

12. Verfahren nach Anspruch 11, das umfasst:
Empfangen in dem zweiten Netzwerkknoten einer Funktionsmigrationsdatei, die von dem ersten Netzwerkknoten oder der Steuereinheit gesendet wird,
die Funktionsmigrationsdatei mindestens ein Element der folgenden Informationen umfasst:
ein Spiegelprogramm der ersten Funktion des ersten Benutzers, Konfigurationsinformationen des ersten Benutzers, eine Planungspriorität einer Funkschnittstelle, Dienstdateninformationen des ersten Benutzers oder eine gesicherte Bandbreite des ersten Benutzers.

13. Erster Netzwerkknoten, umfassend:
eine Sendeeinheit, die konfiguriert ist zum Senden einer Funktionsmigrationsanfrage an einen zweiten Netzwerkknoten, wobei die Funktionsmigrationsanfrage verwendet wird, um anzufragen, dass eine erste Funktion eines ersten Benutzers migriert wird; und
eine Empfangseinheit, die konfiguriert ist zum Empfangen in der Steuereinheit einer Funktionsmigrationsantwort, die von dem zweiten Netzwerkknoten gesendet wird; und
wobei die Sendeeinheit außerdem konfiguriert ist zum Senden einer Migrationsausführungsanweisung an den zweiten Netzwerkknoten, wobei die Migrationsausführungsanweisung verwendet wird, um den zweiten Netzwerkknoten anzuweisen, den ersten Funktionsdienst für den ersten Benutzer auszuführen.

14. Steuereinheit, umfassend:
eine Sendeeinheit, die konfiguriert ist zum Senden einer Funktionsmigrationsanfrage an einen zweiten Netzwerkknoten, wobei die Funktionsmigrationsanfrage verwendet wird, um anzufragen, dass eine erste Funktion eines ersten Benutzers migriert wird; und
eine Empfangseinheit, die konfiguriert ist zum Empfangen in der Steuereinheit einer Funktionsmigrationsantwort, die von dem zweiten Netzwerkknoten gesendet wird; und
wobei die Sendeeinheit außerdem konfiguriert ist zum Senden einer Migrationsausführungsanweisung an den zweiten Netzwerkknoten, wobei die Migrationsausführungsanweisung verwendet wird, um den zweiten Netzwerkknoten anzuweisen, den ersten Funktionsdienst für den ersten Benutzer auszuführen.

15. Zweiter Netzwerkknoten, umfassend:
eine Empfangseinheit, die konfiguriert ist zum Empfangen einer Funktionsmigrationsanfrage, die von einem ersten Netzwerkknoten oder einer Steuereinheit gesendet wird, wobei die Funktionsmigrationsanfrage verwendet wird, um anzufragen, dass eine erste Funktion eines ersten Benutzers migriert wird;
eine Sendeeinheit, die konfiguriert ist zum Senden einer Funktionsmigrationsantwort an den ersten Netzwerkknoten oder an die Steuereinheit, wobei die Empfangseinheit außerdem konfiguriert ist zum Empfangen einer Migrationsausführungsanweisung, die von dem ersten Netzwerkknoten oder der Steuereinheit gesendet wird; und
eine Ausführungseinheit, die konfiguriert ist zum Ausführen der Migrationsausführungsanweisung durch den zweiten Netzwerkknoten, um den ersten Funktionsdienst für den ersten Benutzer auszuführen.

## Revendications

1. Procédé de migration de fonction, consistant à :
envoyer, par un premier noeud de réseau, une demande de migration de fonction à un second noeud de réseau, la demande de migration de fonction étant utilisée pour demander de faire migrer une première fonction d'un premier utilisateur ;
recevoir, par le premier noeud de réseau, une réponse de migration de fonction envoyée par le second noeud de réseau ; et
envoyer, par le premier noeud de réseau, une instruction d'exécution de migration au second noeud de réseau, l'instruction d'exécution de migration étant utilisée pour donner l'instruction au second noeud de réseau de réaliser le premier service de fonction pour le premier utilisateur.

2. Procédé selon la revendication 1, le procédé consistant en outre à :
envoyer, par le premier noeud de réseau, un fichier de migration de fonction au second noeud de réseau,
le fichier de migration de fonction comprenant au moins une des informations suivantes :
un programme miroir de la première fonction du premier utilisateur, une information de configuration du premier utilisateur, une priorité d'ordonnancement d'interface air radio, une information de données de service du premier utilisateur ou une bande passante garantie du premier utilisateur.

3. Procédé selon la revendication 1 ou 2, le procédé consistant en outre à :
annuler, par le premier noeud de réseau, la première fonction du premier utilisateur, et effacer une information de contexte correspondant à la première fonction du premier utilisateur.

4. Procédé selon l'une quelconque des revendications 1 à 3, dans lequel la demande de migration de fonction envoyée par le premier noeud de réseau au second noeud de réseau transporte un identifiant du premier utilisateur et un identifiant de la première fonction.

5. Procédé selon la revendication 4, dans lequel la demande de migration de fonction comprend au moins une des informations suivantes :
une interface pour la migration d'une machine virtuelle au niveau d'une couche application, une identification de machine virtuelle, une interface d'allocation de bande passante, une taille de bande passante, une interface de priorité d'ordonnancement d'interface air radio, une priorité d'ordonnancement d'interface air ou une ampleur de délai.

6. Procédé de migration de fonction, consistant à :
envoyer, par un contrôleur, une demande de migration de fonction à un second noeud de réseau, la demande de migration de fonction étant utilisée pour demander de faire migrer une première fonction d'un premier utilisateur ;
recevoir, par le contrôleur, une réponse de migration de fonction envoyée par le second noeud de réseau ; et
envoyer, par le contrôleur, une instruction d'exécution de migration au second noeud de réseau, l'instruction d'exécution de migration étant utilisée pour donner l'instruction au second noeud de réseau de réaliser le premier service de fonction pour le premier utilisateur.

7. Procédé selon la revendication 6, le procédé consistant en outre à :
envoyer, par le contrôleur, un fichier de migration de fonction au second noeud de réseau,
le fichier de migration de fonction comprenant au moins une des informations suivantes :
un programme miroir de la première fonction du premier utilisateur, une information de configuration du premier utilisateur, une priorité d'ordonnancement d'interface air radio, une information de données de service du premier utilisateur ou une bande passante garantie du premier utilisateur.

8. Procédé selon la revendication 6 ou 7, le procédé consistant en outre à :
envoyer, par le contrôleur, l'instruction d'exécution de migration au premier noeud de réseau, l'instruction d'exécution de migration étant utilisée pour donner l'instruction au premier noeud de réseau d'annuler la première fonction du premier utilisateur, et d'effacer une information de contexte correspondant à la première fonction du premier utilisateur.

9. Procédé selon l'une quelconque des revendications 6 à 8, dans lequel la demande de migration de fonction envoyée par le contrôleur au second noeud de réseau transporte un identifiant du premier utilisateur et un identifiant de la première fonction.

10. Procédé selon la revendication 9, dans lequel la demande de migration de fonction comprend au moins une des informations suivantes :
une interface pour la migration d'une machine virtuelle au niveau d'une couche application, une identification de machine virtuelle, une interface d'allocation de bande passante, une taille de bande passante, une interface de priorité d'ordonnancement d'interface air radio, une priorité d'ordonnancement d'interface air ou une ampleur de délai.

11. Procédé de migration de fonction, consistant à :
recevoir, par un second noeud de réseau, une demande de migration de fonction envoyée par un premier noeud de réseau ou un contrôleur, la demande de migration de fonction étant utilisée pour demander de faire migrer une première fonction d'un premier utilisateur ;
envoyer, par le second noeud de réseau, une réponse de migration de fonction au premier noeud de réseau ou au contrôleur ;
recevoir une instruction d'exécution de migration envoyée par le premier noeud de réseau ou le contrôleur ; et
exécuter, par le second noeud de réseau, l'instruction d'exécution de migration pour réaliser le premier service de fonction pour le premier utilisateur.

12. Procédé selon la revendication 11, consistant à :
recevoir, par le second noeud de réseau, un fichier de migration de fonction envoyé par le premier noeud de réseau ou le contrôleur,
le fichier de migration de fonction comprenant au moins une des informations suivantes :
un programme miroir de la première fonction du premier utilisateur, une information de configuration du premier utilisateur, une priorité d'ordonnancement d'interface air radio, une information de données de service du premier utilisateur ou une bande passante garantie du premier utilisateur.

13. Premier noeud de réseau, comprenant :
une unité d'envoi, configurée pour envoyer une demande de migration de fonction à un second noeud de réseau, la demande de migration de fonction étant utilisée pour demander de faire migrer une première fonction d'un premier utilisateur ; et
une unité de réception, configurée pour recevoir une réponse de migration de fonction envoyée par le second noeud de réseau ; et
l'unité d'envoi est en outre configurée pour envoyer une instruction d'exécution de migration au second noeud de réseau, l'instruction d'exécution de migration étant utilisée pour donner l'instruction au second noeud de réseau de réaliser le premier service de fonction pour le premier utilisateur.

14. Contrôleur, comprenant :
une unité d'envoi, configurée pour envoyer une demande de migration de fonction à un second noeud de réseau, la demande de migration de fonction étant utilisée pour demander de faire migrer une première fonction d'un premier utilisateur ; et
une unité de réception, configurée pour recevoir une réponse de migration de fonction envoyée par le second noeud de réseau ; et
l'unité d'envoi est en outre configurée pour envoyer une instruction d'exécution de migration au second noeud de réseau, l'instruction d'exécution de migration étant utilisée pour donner l'instruction au second noeud de réseau de réaliser le premier service de fonction pour le premier utilisateur.

15. Second noeud de réseau, comprenant :
une unité de réception, configurée pour recevoir une demande de migration de fonction envoyée par un premier noeud de réseau ou un contrôleur, la demande de migration de fonction étant utilisée pour demander de faire migrer une première fonction d'un premier utilisateur ;
une unité d'envoi, configurée pour envoyer une réponse de migration de fonction au premier noeud de réseau ou au contrôleur,
l'unité de réception étant en outre configurée pour recevoir une instruction d'exécution de migration envoyée par le premier noeud de réseau ou le contrôleur ; et
une unité d'exécution, configurée pour exécuter l'instruction d'exécution de migration pour réaliser le premier service de fonction pour le premier utilisateur.
